# EUROPEAN PATENT SPECIFICATION

(11) **EP 2 070 002 B1**
(45) Date of publication and mention of the grant of the patent: **11.04.2012**
(21) Application number: 07839132.3
(22) Date of filing: 01.10.2007
(51) Int. Cl.: G06K 7/00

(54) **PROGRAMMABLE CHIP DESIGN FOR RADIO FREQUENCY SIGNAL GENERATION AND METHOD THEREFOR**
ENTWURF EINES PROGRAMMIERBAREN CHIPS ZUR ERZEUGUNG VON FUNKFREQUENZSIGNALEN UND VERFAHREN DAFÜR
CONCEPTION DE PUCE PROGRAMMABLE POUR GÉNÉRATION DE SIGNAL RADIOFRÉQUENCE ET SON PROCÉDÉ

(30) Priority: 29.09.2006 US 848095 P; 09.05.2007 US 801169
(43) Date of publication of application: 17.06.2009
(73) Proprietor: Sensormatic Electronics, LLC, Boca Raton, FL 33486 (US)
(72) Inventor: ALICOT, Jorge, F., Davie, FL 33331 (US); RELIHAN, Timothy, Lake Worth, FL 33463 (US)
(74) Representative: Hafner, Dieter
(86) International application number: PCT/US2007/021146
(87) International publication number: WO 2008/042364

(56) References cited:
- EP-A- 1 411 694
- WO-A-03/105077
- US-A1- 2004 080 364
- US-A1- 2006 186 995
- US-B1- 6 639 509
- MÄUSL ET AL: "Digitale Modulationeines Sinustraegers" DIGITALE MODULATIONSVERFAHREN, 1995, pages 187-194, XP002249955
- FINKENZELLER K: "RFID-Handbuch, passage" RFID HANDBOOK: GRUNDLAGEN UND PRAKTISCHE ANWENDUNGEN, XX, XX, 1998, pages 38-42,105, XP002249954

## Description

### FIELD OF THE INVENTION

The present invention relates to the field of radio frequency identification ("RFID") communications, and in particular to RFID signal generation.

### BACKGROUND OF THE INVENTION

Radio frequency identification ("RFID") systems are used in a wide variety of applications, and provide convenient mechanisms for the tracking, identification, and authentication of persons or objects. A RFID system typically includes one or more readers (also commonly referred to as interrogators) deployed at selected locations in an installation. Readers are typically deployed where it is desired to control or to receive information about objects or persons bearing or associated with RFID tags (also commonly referred to as markers or transponders). For example, readers may be deployed so as to cover entrances and exits, inventory control points, transaction terminals, and the like. Each reader is capable of receiving information from RFID tags with each tag typically being associated with an object or person. A tag may be affixed to or embedded in an object with which it is associated, or be part of a badge, card, or token given to a person. Signals conveyed between the tag and the reader, allow the reader to sense information on the tag. This information may include, for example, authentication or identification information, or may include instructions, such as a sequence of processes or operations to be conducted upon an object bearing the tag.

Each tag may include stored information that is communicated wirelessly to the reader. Tags typically carry information in onboard memory such as read only memory ("ROM") or nonvolatile programmable memory such as electrically erasable programmable read only memory ("EEPROM") and the amount of information may range from a single bit to kilobits or even more. Single bit tags typically serve as surveillance devices, such as theft prevention tags. Information amounting to a few bits or tens of bits may serve as an identifier, such as may be found in a badge or smart card, while information amounting to kilobits may comprise a portable data file that can be used for identification, communication, or control. The reader may, for example, extract information from a tag and use it for identification, or may store or convey the information to a responsible party. Alternatively, a data file may include a set of instructions that may initiate or control processes or actions without recourse to, or in coordination with, information stored elsewhere.

A tag typically includes a wireless communication device, for example a transmitter or transponder, which is capable of wirelessly communicating stored information to the reader. The tag may communicate the information independently or in response to a signal, such as an interrogation signal, received from the reader. Both active and passive tags are known in the art. An active tag has an onboard power source, while a passive tag may operate without an internal power source, deriving its operating power from a field generated by the reader. Passive tags are much lighter and less expensive than active tags and may offer a virtually unlimited operational lifetime. However, passive tags typically have shorter read ranges than active tags and require a higher powered reader. Passive tags are also constrained in their capacity to store data and their ability to perform well in electromagnetically noisy environments.

A passive tag typically includes memory, which may be read only memory ("ROM") nonvolatile programmable memory such as electrically erasable programmable read only memory ("EEPROM"), or random access memory ("RAM"), depending on the applications to which the tag is to be put. Programmable memory used by a passive tag should be nonvolatile, so that data is not lost when the tag is in a powered down state. When the tag is not actively communicating with the reader, the tag is in a powered down state.

One commonly used implementation of a passive RFID tag includes analog or digital circuitry for processing signals received from and sent to the reader, as well as a antenna for communicating with a compatible reader, for example by electromagnetic coupling. The antenna may also be referred to as a coil. Communication through electromagnetic coupling typically involves superimposing the data upon a rhythmically varying field or carrier wave, which is, using the data to modulate the carrier wave. The carrier wave may suitably be a sinusoidal wave.

In order to receive data from a passive tag or transponder that communicates through electromagnetic coupling, the reader generates a magnetic field, typically using a reader antenna that electromagnetically couples to the transponder antenna. The magnetic field induces a voltage in the transponder antenna, thereby supplying power to the transponder. Data may suitably be transmitted to the reader by changing one parameter of the transmitting field. This parameter may be amplitude, frequency or phase.

The passive tag communicates with the reader by changing the load on the transmitting field. Load changes may suitably affect either the amplitude or phase of the field. These changes to the field are sensed by the reader antenna, which produces a modulated current in response to the field. This current is analyzed, for example, demodulated, to extract the data, which is then used in ways called for by the design of the particular RFID system.

Processing of RFID signals requires significant signal processing power. In addition, signal emission limits for RFID systems set by governmental agencies and/or industry-wide standards organizations create additional processing demands as the signals transmitted by RFID readers require significant conditioning via wave-shaping and filtering. This places a heavy demand on the digital signal processors of typical RFID readers.

There exists, therefore, a need for a system and method that will reduce the processing demands of digital signal processors of RFID readers.

WO 03/105077 A1 teaches a data carrier comprising means for influencing the slope course of the signal edges in an amplitude-modulated signal. The data carrier comprises transmission means designed to transmit the carrier signal, a data signal source designed to generate and emit a data signal and modulation means designed to receive the data signal and, using the data signal to modulate the carrier signal occurring at the transmission means and to generate an amplitude-modulated signal.

US 6,639,509 B1 teaches a system and a method for communicating with an RFID transponder with reduced noise and interference, wherein the RFID interrogator further comprises a microcontroller module adapted to provide high level commands to the interrogator, a DSP module for processing received/transmitted data and controlling radio operations, and a radio module for transmitting and receiving RF signals to/from an RFID transponder.

US 2006/0186995 A1 teaches a multi-protocol radio frequency identification reader transceiver, wherein the transceiver for a RFID reader and a transceiver for a RFID transponder (tag) allow communication between two devices. The RFID reader utilizes an analog front end and a digital backend. In the receiver portion of the transceiver, the front end of the RFID reader uses a pair of down-conversion mixers to demodulate a received signal into in-phase and quadrature components and analog-to-digital converters digitize the signal. A digital signal processor in the back end processes the digital signal and uses a matched filter for data detection.

### SUMMARY OF THE INVENTION

The present invention advantageously provides a method, reader and circuit for generating RFID command signals as defined by claims 1,9 and 15.

In accordance with one aspect, the present invention provides for an integrated circuit device for generating RFID command signals. The integrated circuit device includes at least one command register, the at least one command register storing at least one command bit, the at least one command register storing at least one command bit, the at least one command bit corresponding to a portion of a command to be transmitted to at least one remote communication device, at least one table, the at least one table storing wave-shaping transition values for shaping the at least one command bit prior to transmission, and at least one control register, the at least one control register storing at least one configuration value.

In accordance with another aspect, the present invention provides for a method for using an RFID reader to generate command signals for transmission to at least one remote communication device. The method for using an RFID reader to generate command signals for transmission to at least one remote communication device includes storing at least one wave-shaping transition value, the at least one wave-shaping transition value used to shape at least one command bit of the command signal for transmission of the at least one command bit to the at least one remote communication device, and storing at least one configuration value, the at least one configuration value used to define timing characteristics of the at least one command bit of the command signal for transmission of the at least one command bit to the at least one remote communication device.

In accordance with another aspect, the present invention provides a RFID reader that includes a radio frequency ("RF") module, the radio frequency module includes an RF source for synthesizing RF signals, and a transceiver for transmitting RF signals to at least one remote communication device and receiving RF signals from the at least one remote communication device, and a controller, the controller including a digital signal processor and a signal generation integrated circuit device in which the integrated circuit device includes at least one command bit, where the at least one command bit for transmission to at least one remote communication device, and at least one table where the at least one table stores wave-shaping transition values for shaping the at least one command bit prior to transmission.

### BRIEF DESCRIPTION OF THE DRAWINGS

A more complete understanding of the present invention, and the attendant advantages and features thereof, will be more readily understood by reference to the following detailed description when considered in conjunction with the accompanying drawings, wherein like designations refer to like elements, and wherein:
FIG. 1 is a block diagram of a communication system constructed in accordance with the principles of the present invention;
FIG. 2 is a block diagram of various aspects of the communication system of FIG. 1 constructed in accordance with the principles of the present invention;
FIG. 3 is a block diagram of the controller module and the RF module of an RFID system constructed in accordance with the principles of the present invention;
FIG. 4 is a block diagram of a distributed wave-shaping function of a digital signal processing of an RFID system according to one embodiment of the present invention; and
FIG. 5 is a block diagram of a signal generation programmable logic device with wave-shaping functionality in accordance with the principles of the present invention.

### DETAILED DESCRIPTION OF THE INVENTION

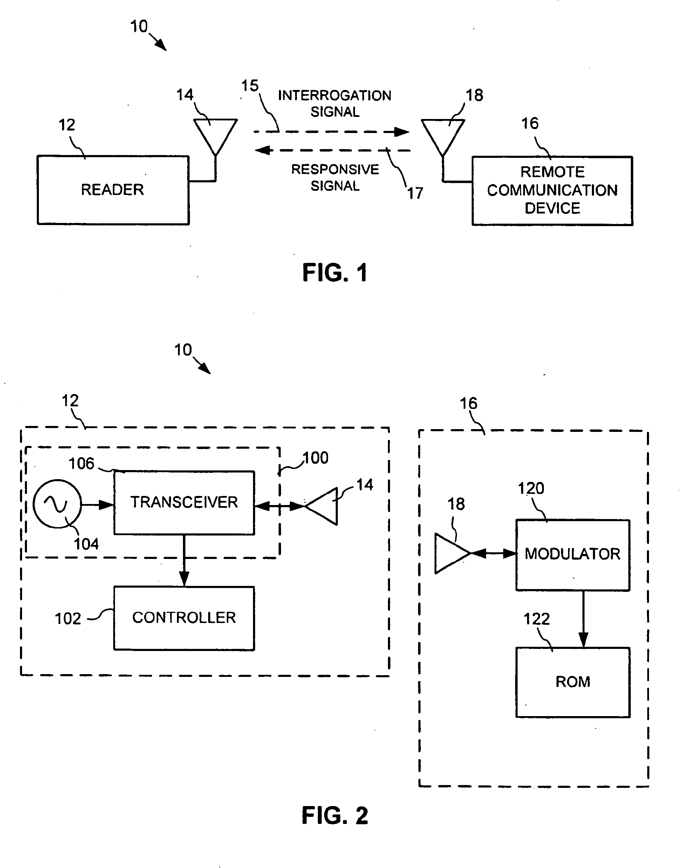

Referring now to the drawing figures in which like reference designators refer to like elements, there is shown in FIG. 1 a diagram of an exemplary communication system constructed in accordance with the principles of the present invention and designated generally as "10". Communication system 10 provides an electronic identification system in the embodiment described herein. Further, the described communication system 10 is configured for backscatter communications as described in detail below. Other communication protocols can be utilized in other embodiments.

The depicted communication system 10 includes at least one electronic wireless remote communication device 16 and a reader 12. Radio frequency ("RF") communications can occur between remote communication devices 16 and reader 12 for use in identification systems and product monitoring systems as exemplary applications.

Devices 16 include radio frequency identification ("RFID") devices in the embodiments described herein. Multiple wireless remote communication devices 16 typically communicate with reader 12 although only one such device 16 is illustrated in FIG. 1.

Although multiple communication devices 16 can be employed in communication system 10, there is typically no communication between multiple devices 16 themselves. Instead, the multiple communication devices 16 communicate with reader 12. Multiple communication devices 16 can be used in the same field of reader 12, i.e., within the communication range of reader 12. Similarly, multiple readers 12 can be in proximity to one or more of devices 16.

Remote communication device 16 is configured to interface with reader 12 using a wireless medium in one embodiment. More specifically, communication between communication device 16 and reader 12 occur via an electromagnetic link, such as an RF link, e.g., at microwave frequencies in the described embodiment. Reader 12 is configured to output forward link wireless communication signals 15. Further, reader 12 is operable to receive return link wireless communication signals 17, e.g., a reply signal, from devices 16 responsive to the forward link communication signals 15. In accordance with the above, forward link communication signals and return link communication signals are wireless signals, such as radio frequency signals. Other forms of electromagnetic communication signals, such as infrared, acoustic, and the like are contemplated.

Reader unit 12 includes at least one antenna 14 as well as transmitting and receiving circuitry, similar to that implemented in devices 16. Antenna 14 comprises a transmit/receive antenna connected to reader 12. In an alternative embodiment, reader 12 can have separate transmit and receive antennas.

In operation, reader 12 transmits a forward link communication signal 15, e.g., an interrogation command signal, via antenna 14. Communication device 16 is operable to receive the incoming forward link signal 15. Upon receiving signal 15, communication device 16 responds by communicating the responsive return link communication signal 17, e.g., a responsive reply signal. Communications within system 10 are described in greater detail below.

In one embodiment, responsive return link communication signal 17, e.g., a responsive reply signal, is encoded with information that uniquely identifies or labels the particular device 16 that is transmitting so as to identify any object, animal, or person with which communication device 16 is associated. Communication devices 16 can be RFID tags that are attached to objects or people where each tag is programmed with information relating to the object or person to which it is attached. The information can take a wide variety of forms and can be more or less detailed depending on the needs to be served by the information. For example, the information may include merchandise identification information, such as a universal product code. A tag may include identifying information and security clearance information for an authorized person to whom the tag has been issued. A tag may also have a unique serial number, in order to uniquely identify an associated object or person. Alternatively, a tag may include more detailed information relating to an object or person, such as a complete description of the object or person. As a further exemplary alternative, a tag may store a single bit, in order to provide for theft control or simple tracking of entry and departure through the detection of an object or person at a particular reader, without necessarily specifically identifying the object or person.

More specifically, remote device 16 is configured to output an identification signal within reply link communication 17 responsive to receiving forward link wireless communication 15. Reader 12 is configured to receive and recognize the identification signal within the reply link communication signal 17, e.g., return signal. The identification signal can be utilized to identify the particular transmitting communication device 16.

An exemplary embodiment of a reader 12 is explained with reference to FIG. 2. In this embodiment, the reader 12 has a RF module 100 and a controller module 102. The RF module 100 includes a radio signal source 104 for synthesizing radio frequency signals, e.g., an interrogating RF signal, that outputs a RF signal to transceiver 106 of the reader 12. The interrogating RF signal from the source 104 uses a suitable frequency such as 915 MHz. When the radio signal source 104 is energized, transceiver 106 transmits the interrogating RF signal (typically after the RF signal has been modulated with an information signal) through antenna 14 to a suitable antenna 18 such as a dipole antenna at a communication device 16.

Modulated signals are received from communication device 16 via antenna 14 and passed to transceiver 106. Controller module 102 of reader 12 receives the digital equivalent of the modulated signal. In one embodiment, controller module 102 produces signals in a sequence having a pattern identifying the pattern of the 1's and 0's in read only memory ("ROM") 122 of communication device 16. For example, the received and processed sequence may be compared in reader 12 with a desired sequence to determine whether the object being identified is being sought by the reader 12 or not.

Continuing to refer to FIG. 2, one embodiment of remote communication device 16 is explained. The depicted communication device 16 includes a modulator 120 having a receiver/transmitter as described below and a data source such as ROM 122, which provides a sequence of binary 1's and binary 0'5 in an individual pattern to identify the object. In this embodiment, a binary "1" in ROM 122 causes a modulator 120 to produce a first plurality of signal cycles and a binary "0" in the read only memory 122 causes the modulator 120 to produce a second plurality of signal cycles different from the first plurality of signals. The pluralities of signals cycles are sequentially produced by the modulator 120 to represent the pattern of binary 1's and binary 0's which identify the object are introduced to the dipole antenna 18 for transmission to antenna 14 at reader 12. In another embodiment, the communication device 16 can have separate receive and transmit antennas.

Communication device 16 may further include an optional power source (not shown) connected to modulator 120 to supply operational power to modulator 120.

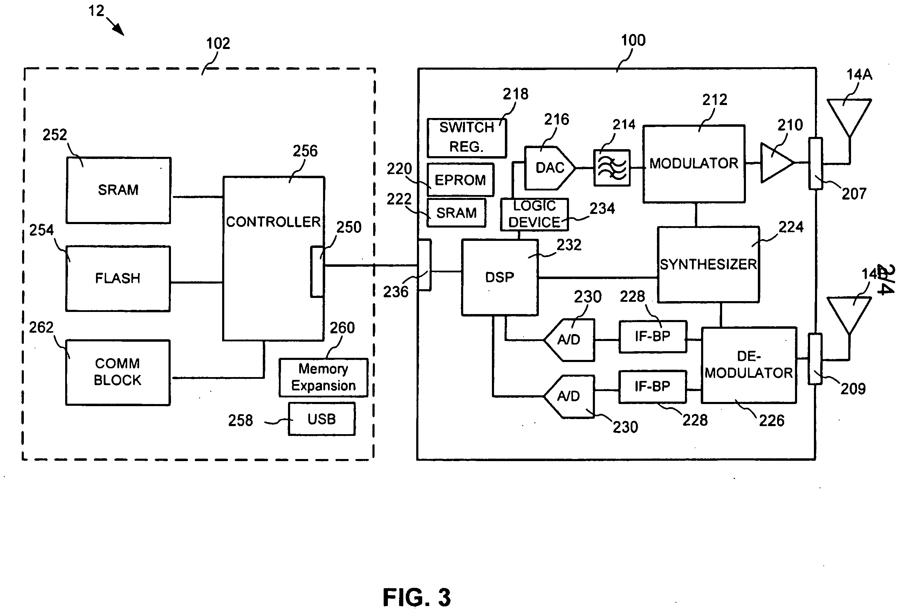

The exemplary embodiment of reader 12 in FIG. 2 is described in more detail with reference to FIG. 3. As shown in FIG. 3, the reader unit 12 includes a controller module 102 and a RF module 100. RF module 100 includes a signal-transmitting antenna 14A, a signal-receiving antenna 14B, a first radio frequency ("RF") interface 207, a second RF interface 209, a power amplifier 210, a modulator 212, a first band pass filter 214, a digital-to-analog converter ("DAC") 216, a switching regulator 218, an erasable programmable read-only memory ("EPROM") 220, a static random access memory ("SRAM") 222, a synthesizer 224, a demodulator 226, second and third band pass filters 228, analog-to-digital converters ("ADC") 230, a digital signal processor ("DSP") 232, a logic device ("LD") 234 and a communication port 236. The synthesizer 224 transmits a reference signal to the modulator 212 and demodulator 226 that can be used to synchronize, filter and/or adjust the received communication signals with the transmitted communication signals.

The modulator 212 receives the reference signal from the synthesizer 224 and inquiry data from the DSP 232. Prior to any modulation, DAC 216 converts the inquiry data from the DSP 232 via LD 234 from a digital signal into an analog signal and provides the converted analog signal to the band pass filter 214, which can restrict a frequency-band of the converted analog signal to a predetermined frequency. The modulator 212 modulates the reference signal in accordance with the inquiry data, and outputs this modulated signal to the power amplifier 210.

The power amplifier 210 amplifies the modulated signal received from the modulator 212, and outputs this amplified signal to the first RF interface 207. subsequently, the signal-transmitting antenna 14A radiates the signal into air as radio-signals.

Continuing to refer to FIG. 3, the controller module 102 includes a communication port 250, the communication port 250 interfaces with communication port 236 of RF module 100, a SRAM 252, a flash memory 254, a controller processor 256, a universal serial bus ("USB") 258, a memory expansion module 260 and a communications block 262.

Controller processor 256 can be any of various commercially available central processing units, and it provides the communication and signal processing of controller module 102, including the communications with one or more RF modules 100 via the communication port 250. Controller processor 256 employs SRAM 252 and flash memory 254 for typical storage of communication data and the like, as well as providing resources for the operating system ("OS"), e.g., Linux/CE, of the controller module 102. Communications block 262 provides a communication link to the network, for example a wireless link or Ethernet link as is known in the art.

The controller module 102 provides application processing for the RFID system as well as network communication control and signal routing. In addition, the controller module 102 provides the processing required by a customer to satisfy that customer's business rules and contains or maintains a single point of contact to the customer's network. This advantageously minimizes the number of RFID network connections required in the customer location and the amount of data traffic on a customer's network. The controller module 102 provides for flexible deployment as it may be mounted in most locations based on individual customer use cases. Each RF module 100 may connect to a single antenna or multiple antennas using optional multiplexing capability.

In order to improve the performance of the RF module 100, the functions of DSP 232 can be distributed. In order to improve performance of an RFID reader 12, the RF module 100 should perform at least the functions of signal protocol handling, signal filtering and signal wave-shaping. By using a logic device 234 to perform the signal wave-shaping function of the RF module 100, the wave-shaping that may have constrained the DSP 232 processing bandwidth is made available to perform other RF module 100 functions such as the signal protocol handling and the signal filtering. This signal generation chip 234, such as an application specific integrated circuit ("ASIC") or a programmable logic device ("PLD"), e.g., a field programmable gate array ("FPGA"), e.g., FPGA, contains wave tables and registers that are used to generate command signals for transmission to RFID tags in a RFID system.

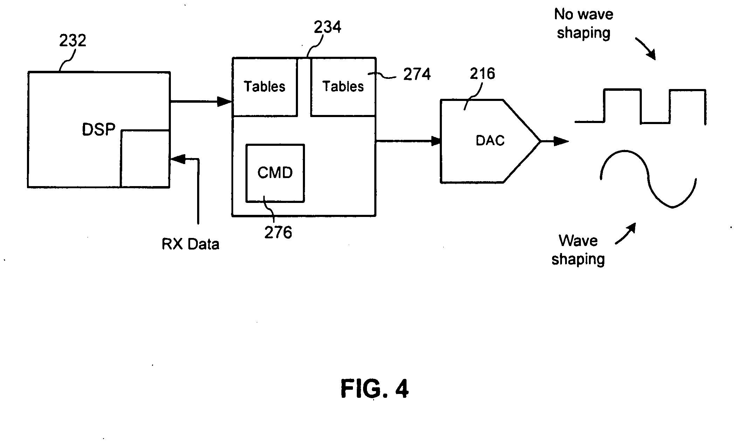

FIG. 4 illustrates the command signal processing of DSP 232 in RFID reader 12. Data received from one or more RFID tags is processed by DSP 232 and a command signal is passed by DSP 232 to the logic device 234. The command signal can be comprised of up to 160 bits and is written into a series of command registers in logic device 234. Signal generation logic device 234 includes additional tables 274 and registers 276 which contain the shape data values and control configuration bit values and characteristics for each command bit of the command signal. Signal generation logic device 234 passes each command bit with its corresponding wave-shaping transition values and configuration values to the DAC 216. DAC 216 converts the digital command into an analog voltage, command bit by command bit, which effectively comprise an analog signal. Without the signal generation logic device 234 providing the wave-shaping information to the DAC 216, this analog signal is initially a square wave signal having sharp transitions between high and low states. These sharp transitions can cause elevated emissions which exceed the regulatory emission limits and standards as the sharp transitions of a square wave can theoretically produce an infinite number of harmonic frequencies. These problematic emissions are minimized by wave-shaping the DAC 216 output signal to "round out" or smooth the waveform thereby reducing or eliminating the extraneous harmonic frequencies. The signal generation logic device 234 controls or shapes the DAC 216 output by providing DAC 216 with the corresponding wave-shaping transition values and configuration values for the transmission signal. In this matter, the number of iterations or steps for transitioning from a high state to a low state or from a low state to a high state is controlled to provide a gradual and smooth transition.

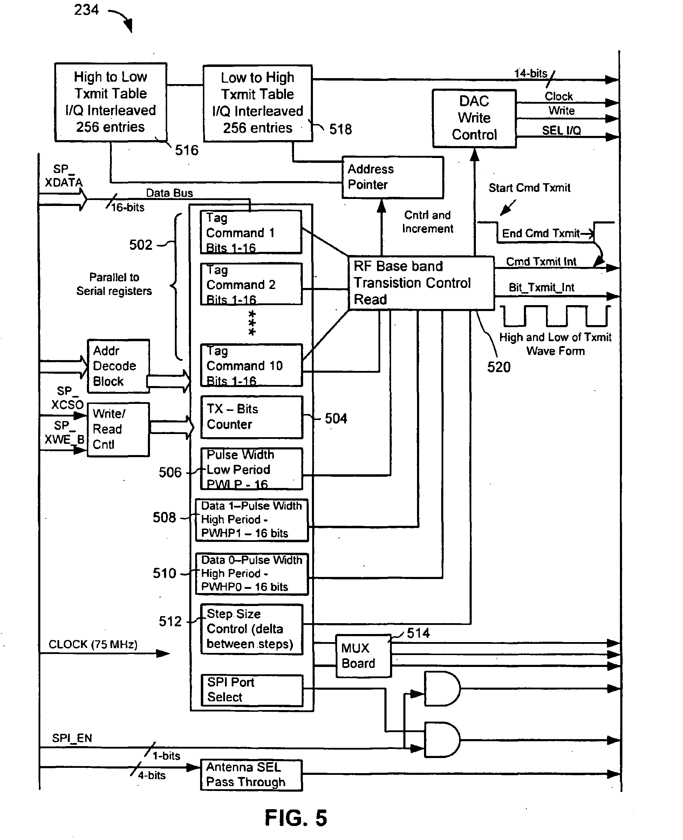

The exemplary embodiment of signal generation logic device 234 of FIG. 3 with wave-shaping functionality is described in more detail with reference to FIG. 5. With reference to FIG. 5, the following registers contain the data bits that are to be transmitted along with parameters that define the shape and duration of each bit, these parameters determine how a command bit is constructed or shaped before being transmitted via an antenna to a population of RFID tags.

Tag Command 502: the DSP 232 sends tag commands via a parallel bus to the LD 234. The tag command can be comprised of up to 160 bits and is written into Tag command registers 1 through 10 of the LD 234.

Tx-Bits Counter 504: this register tells the LD 234 how many bits in the Tag Command registers I to 10 are valid and hence how many bits the LD 234 should transmit as different tag commands are comprised of different numbers of bits.

Pulse width low period 506: this register contains the amount of time or duration value that a bit 1 or 0 is at a low state; this time is the same for a 1 or 0 bit.

Data 1 Pulse width high period 508: this register contains the amount of time or duration value that a high bit (a "1") remains in a high state before transitioning to a low state.

Data 0 Pulse width high period 510: this register contains the amount of time or duration value that a bit 0 remains at a high state before transitioning to low state.

Number of Steps 512: each bit whether it is a 1 or 0 consists of a high state and a low state of certain duration, this register contains the number of steps to be made during transitions from high-to-low and from low-to-high states. By taking multiple steps during a transition it shapes the waveform that makes up a transmitted bit for the purpose of conserving spectrum bandwidth.

MUX Board Configuration 514: This register contains data that commands an optional multiplexer printed circuit board ("PCB") to connect to which external antenna. A multiplexer PCB can connect to one or more external antennas for the purpose of reading and writing to tag populations that come within the read zone of those antennas. This register instructs the MUX PCB as to which antenna(s) to connect to at any given time.

The block RAM is composed of two tables, with each table containing values that are transmitted during low to high and high to low transitions that occur within every command bit. For every bit to be transmitted to a population of tags, these tables are used by the LD 234 to generate or synthesize a shaped waveform for each bit so that these waveforms are spectrally efficient.

Low to High Txmit Table 516: This block RAM contains the transition values that the LD 234 sends to the DAC 216, to generate a smooth spectrally efficient low to high transition. The number of transition values written out to the DAC 216 is contained in the Number of steps register as described above.

High to Low Txmit Table 518: This block RAM contains the transition values that the LD 234 sends to the DAC 216, to generate a smooth spectrally efficient high to low transition. The number of transition values written to the DAC 216 is contained in the number of steps register as described above.

RF Base band transmission control read 520. This part of the LD 234 runs the state machine that transmits the tag command bits contained in the Tag command registers 1 to 10. The RF Base band transmission control read 520 sets up counters to transmit one bit at a time and takes the data values contained in the pulse width register and the number of steps register along with the transition values in block RAM (i.e., the tables) of the LD 234 to write to a DAC 216, which ultimately can construct a smooth bit waveform for transmission to a population of tags. The RF Base band transmission control read 520 repeats this process until all the command bits are sent to the population of RFID tags. Accordingly, the command registers store the command bits, while the control registers store various bit configuration values such as the duration or length of time that a bit 1 or 0 is at a low state. A duty cycle value can also be used to assist in shaping the output signal of DAC 216. The duty cycle is typically defined as the ratio of the time that a bit is in a high state to the time that the bit is in a low state.

Although the wave-shaping function of the LD 234 was discussed with respect to the RF module 100 of FIG. 3, it is in no way limited to such a module, but instead may be deployed in any module, device, subsystem or system were the offloading of the wave-shaping function from a digital signal processor DSP would be advantageous. The DSP/LD may be a standalone module and may be implemented in distributed and non-distributed systems.

The present invention provides a system for enhancing digital signal processor performance by distributing various functions of the digital signal processor to an apparatus such as a logic device ("LD"), e.g., a programmable logic device ("PLD") or an application-specific integrated circuit ("ASIC"). Consequently, the present invention allows for multitasking by the digital signal processor as the digital signal processor can instruct the PLD and then process its buffer, while the PLD is wave-shaping the command signal for transmission. In addition, the use of the PLD provides for easy upgrade to a RFID reader in the field by simply replacing the PLD with a reprogrammed or newly programmed PLD.

The present invention can be realized in hardware, software, or a combination of hardware and software. An implementation of the method and system of the present invention can be realized in a centralized fashion in one computer system or in a distributed fashion where different elements are spread across several interconnected computer systems. Any kind of computer system, or other apparatus adapted for carrying out the methods described herein, is suited to perform the functions described herein.

It will be appreciated by persons skilled in the art that the present invention is not limited to what has been particularly shown and described herein above. In addition, unless mention was made above to the contrary, it should be noted that all of the accompanying drawings are not to scale.

## Claims

1. A radio frequency identification, RFID, circuit for generating RFID command signals, the circuit comprising:
at least one command register (276), the at least one command register (276) storing at least one command bit, the at least one command bit corresponding to a portion of a command to be transmitted to at least one remote communication device (16); and
at least one control register (276), the at least one control register (276) storing at least one configuration value for shaping the at least one command bit,
**characterized in that** the circuit further comprises
at least one table (274), the at least one table (274) storing wave-shaping transition values for shaping the at least one command bit of the command signal and a synthesizer (224), the synthesizer is adapted to transmit a reference signal that can be used to synchronize, filter and/or adjust the received communication signals with the transmitted communication signals.

2. The device of claim 1, wherein the circuit is a programmable logic device (234).

3. The device of claim 2, wherein the programmable logic device (234) is a field programmable gate array.

4. The device of claim 1, wherein the at least one configuration value is a time duration value, time duration value specifying the amount of time that a bit 0 remains at a high state before transitioning to a low state.

5. The device of claim 1, wherein the at least one configuration value is a duty cycle value specifying the ratio of the time that a bit is in a high state to the time that the bit is in a low state.

6. The device of claim 1, wherein the at least one configuration value is a number of transition steps value.

7. The device of claim 1, wherein the at least one configuration value is a pulse width high period value (508).

8. The device of claim 1, wherein the at least one configuration value is a pulse width low period value (506).

9. A method for using an RFID reader (12), which comprises a circuit according to claim 1, to generate command signals (15) for transmission to at least one remote communication device (16), the method comprising:
storing at least one configuration value, the at least one configuration value defining timing characteristics of the at least one command bit of the command signal for transmission of the at least one command bit to the at least one remote communication device (16),
**characterized in**
storing at least one wave-shaping transition value, the at least one wave-shaping transition value used to shape at least one command bit of the command signal (15) for transmission of the at least one command bit to the at least one remote communication device (16) and
using a synthesizer to transmit a reference signal that can be used to synchronize, filter and/or adjust the received communication signals with the transmitted communication signals.

10. The method of claim 9, wherein the at least one configuration value is a time duration value, time duration value specifying the amount of time that a bit 0 remains at a high state before transitioning to a low state.

11. The method of claim 9, wherein the at least one configuration value is a duty cycle value specifying the ratio of the time that a bit is in a high state to the time that the bit is in a low state.

12. The method of claim 9, wherein the at least one configuration value is a number of transition steps value.

13. The method of claim 9, wherein the at least one configuration value is a pulse width high period value (508).

14. The method of claim 9, wherein the at least one configuration value is a pulse width low period value (506).

15. A radio frequency identification (RFID) reader (12) for use in an RFID system (10), the reader (12) comprising:
a radio frequency (RF) module (100), the radio frequency module (100) including an RF source (104) for synthesizing RF signals (15), and a transceiver (106) for transmitting RF signals (15) to at least one remote communication device (16) and receiving RF signals (15) from the at least one remote communication device (16); and
a controller (102), the controller (102) including a digital signal processor (232) and a signal generation circuit according to claim 1.

## Patentansprüche

1. RFID-Schaltung (Radio Frequency Identification) zum Generieren von RFID-Befehlssignalen, wobei die Schaltung Folgendes umfasst:
mindestens ein Befehlsregister (276), wobei das mindestens eine Befehlsregister (276) mindestens ein Befehlsbit speichert, wobei das mindestens eine Befehlsbit einem Abschnitt eines zu mindestens einer abgesetzten Kommunikationseinrichtung (16) zu übertragenden Befehls entspricht; und
mindestens ein Steuerregister (276), wobei das mindestens eine Steuerregister (276) mindestens einen Konfigurationswert zum Formen des mindestens einen Befehlsbits speichert,
**dadurch gekennzeichnet, dass** die Schaltung weiterhin Folgendes umfasst:
mindestens eine Tabelle (274), wobei die mindestens eine Tabelle (274) wellenformende Übergangswerte zum Formen des mindestens einen Befehlsbits des Befehlssignals und einen Synthetisierer (224) umfasst, wobei der Synthetisierer ausgelegt ist zum Übertragen eines Referenzsignals, das zum Synchronisieren, Filtern und/oder Justieren der empfangenen Kommunikationssignale mit den übertragenen Kommunikationssignalen verwendet werden kann.

2. Einrichtung nach Anspruch 1, wobei die Schaltung eine programmierbare Logikeinrichtung (234) ist.

3. Einrichtung nach Anspruch 2, wobei die programmierbare Logikeinrichtung (234) ein feldprogrammierbares Gate-Array ist.

4. Einrichtung nach Anspruch 1, wobei der mindestens eine Konfigurationswert ein Zeitdauerwert ist, wobei der Zeitdauerwert das Zeitausmaß spezifiziert, während dem ein Bit 0 vor dem Übergang in einen niedrigen Zustand auf einem hohen Zustand bleibt.

5. Einrichtung nach Anspruch 1, wobei der mindestens eine Konfigurationswert ein Tastzykluswert ist, der das Verhältnis der Zeit, während der ein Bit in einem hohen Zustand ist, zu der Zeit, während der das Bit in einem niedrigen Zustand ist, spezifiziert.

6. Einrichtung nach Anspruch 1, wobei der mindestens eine Konfigurationswert ein Wert der Anzahl von Übergangsschritten ist.

7. Einrichtung nach Anspruch 1, wobei der mindestens eine Konfigurationswert ein Wert (508) einer Periode mit großer Impulsbreite ist.

8. Einrichtung nach Anspruch 1, wobei der mindestens eine Konfigurationswert ein Wert (506) einer Periode mit kleiner Impulsbreite ist.

9. Verfahren zum Verwenden eines RFID-Lesegeräts (12), das eine Schaltung nach Anspruch 1 umfasst, zum Generieren von Befehlssignalen (15) zur Übertragung an mindestens eine abgesetzte Kommunikationseinrichtung (16), wobei das Verfahren Folgendes umfasst:
Speichern mindestens eines Konfigurationswerts,
wobei der mindestens eine Konfigurationswert Zeitsteuercharakteristika mindestens eines Befehlsbits des Befehlssignals zur Übertragung des mindestens einen Befehlsbits an die mindestens eine abgesetzte Kommunikationseinrichtung (16) definiert,
**gekennzeichnet durch**
Speichern mindestens eines wellenformenden Übergangswerts, wobei der mindestens eine wellenformende Übergangswert zum Formen mindestens eines Befehlsbits des Befehlssignals (15) zur Übertragung des mindestens einen Befehlsbits an die mindestens eine abgesetzte Kommunikationseinrichtung (16) verwendet wird, und
Verwenden eines Synthetisierers zum Übertragen eines Referenzsignals, das zum Synchronisieren,
Filtern und/oder Justieren der empfangenen Kommunikationssignale mit den übertragenen Kommunikationssignalen verwendet werden kann.

10. Verfahren nach Anspruch 9, wobei der mindestens eine Konfigurationswert ein Zeitdauerwert ist, wobei der Zeitdauerwert das Zeitausmaß spezifiziert, während dem ein Bit 0 vor dem Übergang in einen niedrigen Zustand auf einem hohen Zustand bleibt.

11. Verfahren nach Anspruch 9, wobei der mindestens eine Konfigurationswert ein Tastzykluswert ist, der das Verhältnis der Zeit, während der ein Bit in einem hohen Zustand ist, zu der Zeit, während der das Bit in einem niedrigen Zustand ist, spezifiziert.

12. Verfahren nach Anspruch 9, wobei der mindestens eine Konfigurationswert ein Wert der Anzahl von Übergangsschritten ist.

13. Verfahren nach Anspruch 9, wobei der mindestens eine Konfigurationswert ein Wert (508) einer Periode mit großer Impulsbreite ist.

14. Verfahren nach Anspruch 9, wobei der mindestens eine Konfigurationswert ein Wert (506) einer Periode mit kleiner Impulsbreite ist.

15. RFID-Lesegerät (Radio Frequency Identification) (12) zur Verwendung in einem RFID-System (10), wobei das Lesegerät (12) Folgendes umfasst:
ein Hochfrequenzmodul (RF) (100), wobei das Hochfrequenzmodul (100) eine RF-Quelle (104) zum Synthetisieren von RF-Signalen (15) enthält, und
einen Sendeempfänger (106) zum Übertragen von RF-Signalen (15) an mindestens eine abgesetzte Kommunikationseinrichtung (16) und Empfangen von RF-Signalen (15) von der mindestens einen abgesetzten Kommunikationseinrichtung (16); und
einen Controller (102), wobei der Controller (102) einen digitalen Signalprozessor (232) und eine Signalgenerierungsschaltung nach Anspruch 1 enthält.

## Revendications

1. Circuit d'identification radiofréquence, RFID, permettant de générer des signaux de commande RFID, le circuit comprenant :
au moins un registre de commande (276), ledit au moins un registre de commande (276) stockant au moins un bit de commande, ledit au moins un bit de commande correspondant à une partie d'une commande à transmettre à au moins un dispositif de communication à distance (16) ; et
au moins un registre de contrôle (276), ledit au moins un registre de contrôle (276) stockant au moins une valeur de configuration permettant de mettre en forme ledit au moins un bit de commande,
le circuit étant **caractérisé en ce qu'**il comprend en outre :
au moins une table (274), ladite au moins une table (274) stockant des valeurs de transition de mise en forme d'onde permettant de mettre en forme ledit au moins un bit de commande du signal de commande, et un synthétiseur (224), le synthétiseur étant conçu pour transmettre un signal de référence susceptible d'être utilisé pour synchroniser, filtrer et/ou ajuster les signaux de communication reçus par rapport aux signaux de communication transmis.

2. Dispositif selon la revendication 1, le circuit étant un dispositif logique programmable (234).

3. Dispositif selon la revendication 2, le dispositif logique programmable (234) étant une matrice prédiffusée programmable par l'utilisateur.

4. Dispositif selon la revendication 1, ladite au moins une valeur de configuration étant une valeur de durée, la valeur de durée précisant la quantité de temps pendant laquelle un bit 0 reste à un état haut avant de passer à un état bas.

5. Dispositif selon la revendication 1, ladite au moins une valeur de configuration étant une valeur de rapport cyclique précisant le rapport entre le temps passé par un bit à un état haut et le temps passé par le bit à un état bas.

6. Dispositif selon la revendication 1, ladite au moins une valeur de configuration étant une valeur de nombre de pas de transition.

7. Dispositif selon la revendication 1, ladite au moins une valeur de configuration étant une valeur de période haute de largeur d'impulsion (508).

8. Dispositif selon la revendication 1, ladite au moins une valeur de configuration étant une valeur de période basse de largeur d'impulsion (506).

9. Procédé d'utilisation d'un lecteur RFID (12), lequel comprend un circuit selon la revendication 1, pour générer des signaux de commande (15) destinés à être transmis à au moins un dispositif de communication à distance (16), le procédé comprenant les étapes consistant à :
stocker au moins une valeur de configuration, ladite au moins une valeur de configuration définissant des caractéristiques temporelles d'au moins un bit de commande du signal de commande pour la transmission dudit au moins un bit de commande audit au moins un dispositif de communication à distance (16),
le procédé étant **caractérisé en ce qu'**il comprend les étapes consistant à :
stocker au moins une valeur de transition dé mise en forme d'onde, ladite au moins une valeur de transition de mise en forme d'onde étant utilisée pour mettre en forme au moins un bit de commande du signal de commande (15) pour la transmission dudit au moins un bit de commande audit au moins un dispositif de communication à distance (16) ; et
utiliser un synthétiseur pour transmettre un signal de référence susceptible d'être utilisé pour synchroniser, filtrer et/ou ajuster les signaux de communication reçus par rapport aux signaux de communication transmis.

10. Procédé selon la revendication 9, ladite au moins une valeur de configuration étant une valeur de durée, la valeur de durée précisant la quantité de temps pendant laquelle un bit 0 reste à un état haut avant de passer à un état bas.

11. Procédé selon la revendication 9, ladite au moins une valeur de configuration étant une valeur de rapport cyclique précisant le rapport entre le temps passé par un bit à un état haut et le temps passé par le bit à un état bas.

12. Procédé selon la revendication 9, ladite au moins une valeur de configuration étant une valeur de nombre de pas de transition.

13. Procédé selon la revendication 9, ladite au moins une valeur de configuration étant une valeur de période haute de largeur d'impulsion (508).

14. Procédé selon la revendication 9, ladite au moins une valeur de configuration étant une valeur de période basse de largeur d'impulsion (506).

15. Lecteur d'identification radiofréquence (RFID) (12) destiné à être utilisé dans un système RFID (10), le lecteur (12) comprenant :
un module radiofréquence (RF) (100), le module radiofréquence (100) comportant une source RF (104) permettant de synthétiser des signaux RF (15) et un émetteur-récepteur (106) permettant de transmettre des signaux RF (15) à au moins un dispositif de communication à distance (16) et de recevoir des signaux RF (15) dudit au moins un dispositif de communication à distance (16) ; et
un contrôleur (102), le contrôleur (102) comportant un processeur numérique de signaux (232) et un circuit de génération de signaux selon la revendication 1.
